# EUROPÄISCHE PATENTSCHRIFT

(11) **EP 2 418 715 B1**
(45) Veröffentlichungstag und Bekanntmachung des Hinweises auf die Patenterteilung: **19.03.2014**
(21) Anmeldenummer: 11006528.1
(22) Anmeldetag: 09.08.2011
(51) Int. Cl.: H01M 2/20, H01M 10/02, H01M 10/04, H01M 2/02, H01M 2/10, H01M 2/30

(54) **Druckstück zur Kontaktierung eines elektrischen Ableiters**
Pressure piece for contacting an electric lead
Elément de pression pour la mise en contact d'un conducteur électrique

(30) Priorität: 09.08.2010 DE 102010033793
(43) Veröffentlichungstag der Anmeldung: 15.02.2012
(73) Patentinhaber: ads-tec GmbH, 70771 Leinfelden-Echterdingen (DE)
(72) Erfinder: Speidel, Thomas, 71706 Markgröningen (DE); Greif, Andreas, 73235 Weilheim/Teck (DE)
(74) Vertreter: Wasmuth, Rolf

(56) Entgegenhaltungen:
- EP-A2- 1 505 670
- JP-A- 2006 190 547
- JP-A- 2006 196 226
- JP-A- 2009 043 637

## Beschreibung

Die Erfindung betrifft einen Akkupack, bestehend aus einer Mehrzahl einzelner Akkuzellen, insbesondere Flachzellen nach dem Oberbegriff des Anspruchs 1.

Akkupacks sind in einem aufnehmenden Gehäuse angeordnet und werden als Akkublocks konfektioniert. Um größere Leistungen bereitzustellen, wie sie z. B. für Elektrofahrzeuge benötigt werden, werden eine Vielzahl von Akkublocks zusammengefasst. Die Akkuzellen der einzelnen Akkupacks sind zur Erzielung einer ausreichend hohen Ausgangsspannung in Reihe geschaltet, wobei wechselweise die Anodenableiter und Kathodenableiter benachbarter Akkuzellen miteinander zu verbinden sind. Dabei muss gewährleistet sein, dass die elektrische Verbindung hochstromfest ist, da insbesondere bei der Verwendung mit Kraftfahrzeugen hohe Spitzenströme auftreten. Daneben ist zu gewährleisten, dass die elektrische Verbindung der Ableiter auch nach längeren Einsatzzeiten der Akkublocks keine Korrosion aufweist, da diese den Übergangswiderstand und damit die Verlustleistung erhöht.

Aus der EP 1 505 670 A2 ist ein Akkupack bekannt, bei dem die Ableiter parallel geschalteter Akkuzellen durch zugeordnete Schlitze einer gemeinsamen Stromschiene geführt werden. Um eine Kontaktierung der Ableiter gleicher Polarität mit der jeweiligen Stromschiene zu erzielen, wird ein an der Stromschiene einzuschiebender Klemmkeil verwendet, der die in den einzelnen Schlitzen gehaltenen Ableiter umknickt und aufeinander legt. Damit das Einschieben des Klemmkeils mit vertretbaren Kräften erfolgt, werden die Ableiter vor Einschieben des Klemmkeils mit einem Spray benetzt. Die elektrische Verbindung der Ableiter untereinander ist durch eine gegenseitige Anlage der Ableiter und Anpressen der Ableiter an die Stromschiene erzielt. Die mechanische Anpresskraft wird durch den eingeschobenen Klemmkeil bereitgestellt.

Der Erfindung liegt die Aufgabe zugrunde, einen Akkupack aus einer Mehrzahl einzelner Akkuzellen derart weiterzubilden, dass die Ableiter der Akkuzellen mit geringem Übergangswiderstand sicher miteinander kontaktiert werden.

Die Aufgabe wird erfindungsgemäß nach den kennzeichnenden Merkmalen des Anspruchs 1 gelöst.

Zwischen zwei elektrisch zu verbindenden Ableitern ist ein druckstabiles Kontaktelement angeordnet. Ein Ableiter wird über ein Druckstück elektrisch leitend an das Kontaktelement angelegt, wobei die Konstruktion so ausgelegt ist, dass beim Andrücken des Ableiters an das Kontaktelement Scherkräfte aufgebracht werden. Diese Scherkräfte wirken zwischen der Kontaktfläche des Kontaktelementes und der Kontaktfläche des Ableiters und sind durch gegenparallele Kräfte gebildet.

Um hohe Scherkräfte aufzubauen, liegt die Kontaktfläche am Kontaktelement unter einem Winkel zur Längsmittelachse des Druckstückes; entsprechend liegt eine Druckfläche des Druckstückes unter einem Winkel zu seiner Längsmittelebene. Die Winkel der Kontaktfläche und der Winkel der Druckfläche sind dabei gleich, wobei die Flächen eine schiefe Ebene bilden.

Die Anpresskraft des Ableiters auf die Kontaktfläche des Kontaktelementes unter Aufbringung einer Scherkraft wird durch eine Schraubverbindung des Druckstückes erzielt.

Das Druckstück wird in Befestigungsrichtung etwa lotrecht auf einer Bodenplatte festgeschraubt.

Das Druckstück besteht aus einem elektrisch isolierenden Material, zweckmäßig aus Kunststoff, insbesondere aus einem glasfaserverstärkten Kunststoff. Wirtschaftlich kann das Druckstück als Spritzgussteil hergestellt sein.

Der Akkupack ist so gestaltet, dass mehrere Kontaktelemente in einer Reihe nebeneinander liegen. Der einem ersten Kontaktelement zugeordnete Ableiter einer Akkuzelle und der einem benachbarten Kontaktelement zugeordnete Ableiter einer benachbarten Akkuzelle werden durch ein gemeinsames Druckstück in Anlage an das jeweils zugeordnete Kontaktelement gebracht. Dabei werden die Ableiter beim Einsetzen und Festschrauben des Kontaktstückes entsprechend dem Winkel der Druckfläche und dem Winkel der Kontaktfläche abgewinkelt, bis sie elektrisch leitend am Kontaktelement angedrückt sind.

Die Ableiter durchragen die Bodenplatte in Schlitzen, wobei die Kontaktelemente auf der Bodenplatte aufstehen und das Druckstück auf der Bodenplatte befestigt ist. Alle bei der Kontaktierung aufgebrachten Kräfte werden so in der Bodenplatte abgefangen.

Um ein sicheres Abstützen der auf die Kontaktelemente wirkenden Druckkräfte zu gewährleisten, greift ein an der Bodenplatte ausgebildeter Steg mechanisch stützend in das Kontaktelement ein und stützt dessen Seitenwände gegeneinander ab.

Um eine innige, elektrisch gut leitende Kontaktierung zu erzielen, ist vorgesehen, dass zumindest eine der einander gegenüberliegenden Kontaktflächen eine aufgeraute Oberfläche mit Erhebungen aufweist, die unter Anlagedruck in das gegenüberliegende Material elektrisch kontaktierend eindringen. Durch diese Gestaltung wird gewährleistet, dass eine auf einem aus Aluminium bestehenden Ableiter ausgebildete Aluminiumoxidschicht beim Aufbringen der Druck- und Scherkräfte aufgebrochen wird und die elektrische Kontaktierung nicht behindert.

In Weiterbildung der Erfindung werden die aneinanderliegenden Kontaktflächen zwischen Ableiter und Kontaktelement durch eine umlaufende Dichtung abgedichtet, wobei die umlaufende Dichtung zweckmäßig zwischen dem Druckstück und der Kontaktfläche geklemmt gehalten ist. Der Raumbereich innerhalb der Dichtung wird vorteilhaft mit Leitpaste gefüllt, so dass der Kontaktbereich sicher gegen Oxidation bzw. Korrosion geschützt ist.

Weitere Merkmale der Erfindung ergeben sich aus den weiteren Ansprüchen, der Beschreibung und der Zeichnung, in der nachfolgend im Einzelnen beschriebene Ausführungsbeispiele dargestellt sind. Es zeigen:
- Fig. 1: in perspektivischer, schematischer Darstellung einen Akkublock mit einem darin angeordneten Akkupack,
- Fig. 2: in schematischer Darstellung einen Längsschnitt durch den Akkublock nach Fig. 1,
- Fig. 3: in schematischer, perspektivischer Darstellung den Anschlussbereich des Akkupacks,
- Fig. 4: in vergrößerter, schematischer Darstellung den Anschlussbereich der Ableiter des Akkupacks,
- Fig. 5: einen schematischen Schnitt durch den Anschlussbereich des Akkupacks nach Fig. 4,
- Fig. 6: einen Längsschnitt durch ein Druckstück,
- Fig. 7: eine schematische Ansicht auf die Ausbildung einer Kontaktfläche eines Kontaktelementes,
- Fig. 8: einen schematischen Schnitt durch einen am Kontaktelement kontaktierten Ableiter.

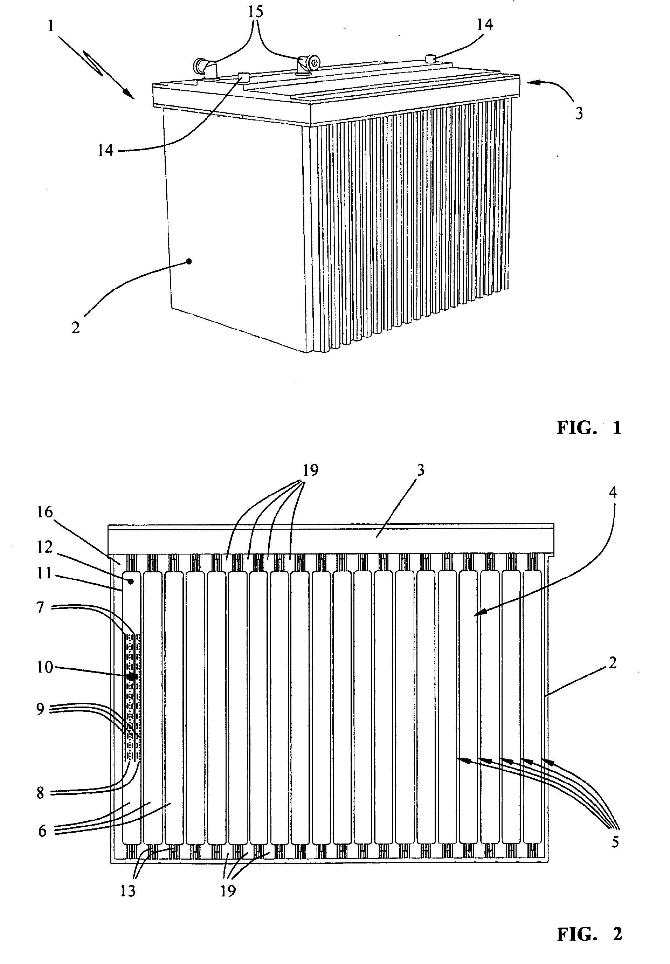

In Fig. 1 ist ein Akkublock 1 dargestellt, der ein Gehäuse 2 und einen das Gehäuse 2 verschließenden Deckel 3 aufweist. Wie sich aus dem Schnitt nach Fig. 2 ergibt, ist im Gehäuse 2 ein Akkupack 4 aus einer Vielzahl von Einzelzellen 5 angeordnet, die im Gehäuse 2 des Akkublocks 1 mechanisch fest gehalten sind. Im gezeigten Ausführungsbeispiel ist die Einzelzelle als Akkuflachzelle 6 aufgebaut, auch Pouchzelle genannt, und basiert chemisch auf Lithium, z. B. als Li Ion-Zelle.

Wie in Fig. 2 an der linken Zelle 6 schematisch dargestellt, besteht diese aus einer Vielzahl von aufeinandergeschichteten Kathodenfolien 7 und Anodenfolien 8, die jeweils durch dazwischen angeordnete Separatorfolien 9 voneinander getrennt sind. Die Kathodenfolien sind mit einem Kathodenableiter 17 und die Anodenfolien mit einem Anodenableiter 18 verbunden. Das Folienpaket 10 ist in eine Gehäusefolie 11 eingeschlagen, welche ein Foliengehäuse 12 bildet. Das Foliengehäuse ist umlaufend dicht verschlossen, z. B. durch eine umlaufende Siegelnaht 13. Im Foliengehäuse 12 ist eine Elektrolytlösung eingefüllt.

Die meist aus einer Kupferfolie bestehende Anodenfolie 8 ist innerhalb des Foliengehäuses 12 mit dem Anodenableiter 18 verbunden, der durch die Siegelnaht 13 nach außen geführt ist. Entsprechend ist die vorzugsweise aus einer Aluminiumfolie bestehende Kathodenfolie 7 im Foliengehäuse 12 mit dem Kathodenableiter 17 elektrisch leitend verbunden, der ebenfalls durch die Siegelnaht 13 nach außen geführt ist.

Das Gehäuse 2 des Akkublocks 1 ist durch den Deckel 3 vorzugsweise gas- und flüssigkeitsdicht verschlossen, wobei im Deckel 3 die Anschlusspole 14 des Akkublocks 1 elektrisch nach außen geführt sind.

Am Deckel 3 sind ferner Anschlüsse 15 vorgesehen, über die der Akkublock 1 an ein strömendes Medium angeschlossen ist, über das Verlustwärme aus dem Akkublock 1 abgeführt oder bei zu niedrigen Temperaturen dem Akkublock 1 Wärme zugeführt werden kann.

Der Innenraum 16 des Akkugehäuses 2 ist aufgrund der mechanisch im Gehäuse 2 gehaltenen Akkuflachzellen 6 in eine Vielzahl von Hohlräumen 19 aufgeteilt. Zweckmäßig ist vorgesehen, dass die Hohlräume 19 des Innenraums 16 untereinander in mittelbarer oder unmittelbarer Strömungsverbindung stehen. Vorzugsweise stehen alle Hohlräume 19 des Innenraums 16 eines Akkugehäuses 2 einschließlich die des Deckels 3 miteinander in mittelbarer oder unmittelbarer Strömungsverbindung.

Die Ableiter 17 und 18 einer Akkuflachzelle 6 durchragen Schlitze 21 in einer Bodenplatte 20, die Teil des Deckels 3 ist. Zwischen zwei elektrisch zu verbindende Ableiter 17 und 18 ist ein druckstabiles Kontaktelement 30 angeordnet, was im gezeigten Ausführungsbeispiel aus einem zur Bodenplatte 20 offenen Profilkörper 29 gebildet ist. Der Profilkörper 29 des Kontaktelementes 30 steht auf der Bodenplatte 20 auf, wobei ein an der Bodenplatte 20 ausgebildeter Steg 26 den Profilkörper 29 verschließt. Zweckmäßig greift der Steg 26 dichtend in den Profilkörper 29 ein. Der Steg 26 stützt dabei die Seitenwände 27 und 28 des Profilkörpers 29 mechanisch gegeneinander ab, so dass die durch das Druckstück 25 aufgebrachten Druckkräfte ohne körperliche Verformung von dem Profilkörper 29 aufgenommen werden können.

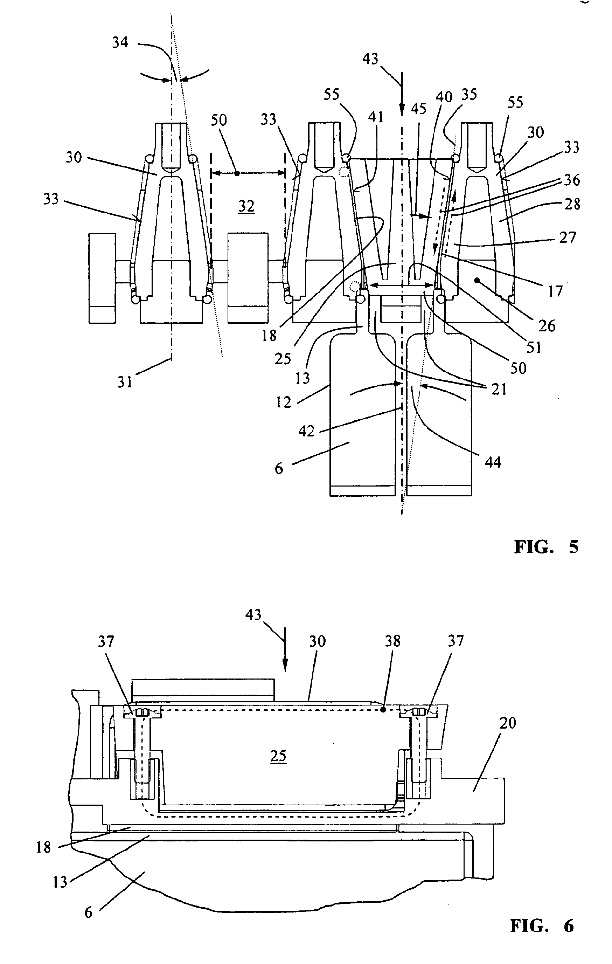

Das Druckstück 25 ist - vgl. Fig. 5 - nach Art eines Klemmkeils ausgebildet und weist Druckflächen 40, 41 auf, die die Keilform des Druckstücks 25 bestimmen. Die Druckflächen 40 und 41 liegen unter einem Winkel 44 zur Längsmittelebene 42 des Druckstückes 25, wobei im gezeigten Ausführungsbeispiel das Druckstück 25 symmetrisch zur Längsmittelebene 42 ausgebildet ist.

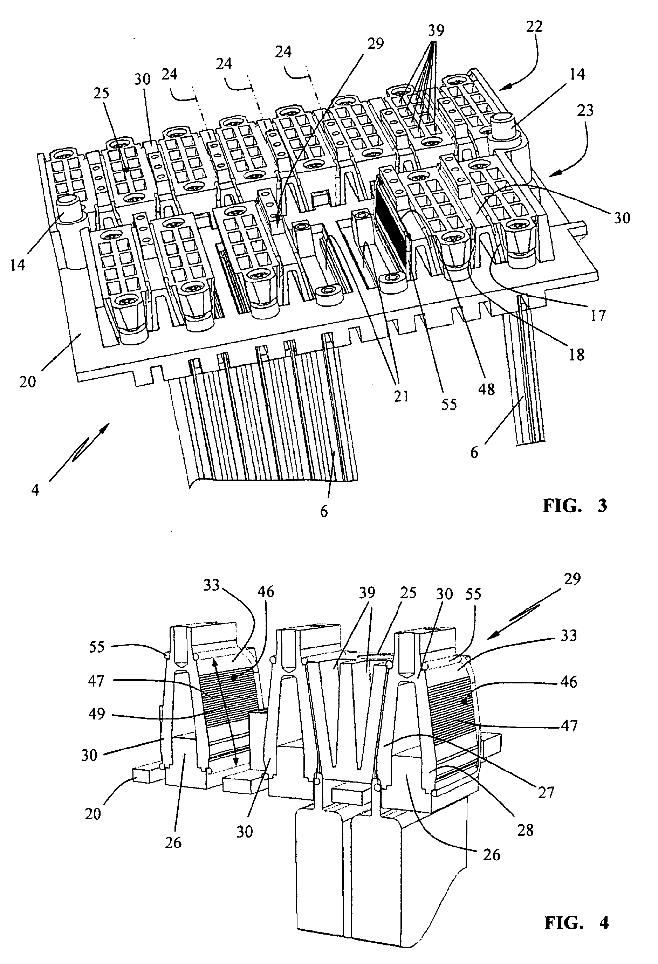

Das Kontaktelement 30 weist eine Kontaktfläche 33 auf, die unter einem Winkel 34 zur Längsmittelebene 31 des Kontaktelementes 30 liegt. Die Kontaktflächen 33 nebeneinander liegender Kontaktelemente 30 begrenzen einen Aufnahmeraum 32, dessen Querschnittskontur etwa dem Querschnitt des Druckstücks 25 entspricht. Der Winkel 34 einer Kontaktfläche 33 und der Winkel 44 einer zugeordneten Druckfläche 40 bzw. 41 sind gleich, so dass - wie sich aus den Fig. 4 und 5 ergibt - eine Kontaktfläche 33 und eine Druckfläche 40 bzw. 41 zueinander etwa parallel liegen.

Zwischen den Druckflächen 33 und 40 bzw. 41 liegt ein Ableiter 17 bzw. 18, wobei der Ableiter 17 bzw. 18 durch Festlegen des Druckstücks 25 in Befestigungsrichtung 43 an die jeweilige Kontaktfläche 33 fest angedrückt wird. Aufgrund der schiefen Ebene von Kontaktfläche 33 und Druckfläche 40 bzw. 41 werden beim Festlegen des Druckstücks 25 in Befestigungsrichtung 43 gegenparallele Kräfte 36 in der Anlageebene 35 auftreten, also Scherkräfte.

Das Druckstück 25 wird dabei mittels Befestigungsschrauben 37 in Befestigungsrichtung 43 auf der Bodenplatte 20 festgeschraubt, wobei zwischen der Bodenplatte 20 und dem Druckstück 25 ein geschlossener Kraftfluss 38 geschaffen ist. Da die senkrecht auf die Kontaktfläche 33 wirkende Anpresskraft 45 vom Kontaktelement 30 in den eingreifenden Steg 26 abgeleitet wird, werden alle Kräfte der Kontaktverbindung in der Bodenplatte 20 abgefangen.

Das Druckstück 25 ist aus einem elektrisch isolierenden Material hergestellt, vorzugsweise aus Kunststoff. Um eine hohe Druckstabilität des Druckstücks 25 selbst zu gewährleisten, ist vorteilhaft ein glasfaserverstärkter Kunststoff verwendet und das Druckstück mit Hohlkammern 39 ausgebildet. In dieser Gestaltung kann das Druckstück 25 in einfacher Weise als Spritzgussteil hergestellt sein.

Um eine gute elektrische Kontaktierung zu gewährleisten, ist auf der Kontaktfläche 33 des Kontaktelements 30 und/oder auf der zugewandten Kontaktfläche des Ableiters 17 bzw. 18 die Oberfläche aufgeraut, vorzugsweise mit Erhebungen 46 versehen. Im gezeigten Ausführungsbeispiel nach den Fig. 3 bis 5 sind auf der Kontaktfläche 33 des Kontaktelementes 30 Erhebungen 46 in Form von Stegen 47 oder Rippen vorgesehen, die sich zweckmäßig im Wesentlichen über die gesamte Länge 48 der Kontaktfläche 33 und über einen Großteil ihrer Höhe 49 erstrecken. Die Erhebungen 46 werden beim Andrücken eines Ableiters 17, 18 aufgrund der Anpresskraft 45 und der Scherkräfte 36 in das Material des Ableiters eindringen und eine innige, quasi stoffschlüssige Verbindung mit einem geringen Übergangswiderstand herstellen. Dadurch ist eine hochstromfeste, verlustarme Kontaktierung gegeben, die nach Lösen des Druckstücks 25 jederzeit gelöst werden kann. Damit bleiben die Akkuflachzellen 6 innerhalb des Akkupacks 4 mit einfachen Mitteln austauschbar.

Ein Druckstück 25 ist so gestaltet, dass sein schmales Ende 51 schmaler ist als der Abstand 50 zwischen den durch die Schlitze 21 ragenden Ableitern 17 und 18. Dies hat den Vorteil, dass das Druckstück 25 mit seinem schmalen Ende 51 voraus zwischen die senkrecht stehenden Ableiter 17 und 18 eingefädelt werden kann, so dass beim Eindrücken des Druckstücks 25 in den Aufnahmeraum 32 zwischen zwei Kontaktelementen 30 die Ableiter 17 und 18 in Anlage an die Kontaktflächen 33 der Kontaktelemente 30 durch das Druckstück 25 abgewinkelt werden. Die Anordnung ist dabei so getroffen, dass der Ableiter des einen Kontaktelementes und der Ableiter des benachbarten Kontaktelementes durch ein gemeinsames Druckstück 25 an das jeweils zugeordnete Kontaktelement 30 angelegt werden. Ein Druckstück 25 kontaktiert somit beim Festschrauben zwei Ableiter 17, 18 an zwei Kontaktelementen 30.

Die gute Kontaktierung zwischen einem Ableiter 17, 18 und einer Kontaktfläche 33 des Kontaktelementes 30 kann über eine lange Zeit gewährleistet werden, indem der Kontaktbereich zwischen dem Ableiter 17, 18 und der Kontaktfläche 33 des Kontaktelementes 30 durch eine umlaufende Dichtung 55 abgedichtet ist. Die umlaufende Dichtung 55 verschließt den Kontaktspalt zwischen dem Ableiter und dem Kontaktelement, wobei bevorzugt der Raumbereich innerhalb der Dichtung mit einer Leitpaste gefüllt ist. Dies schützt den Kontakt vor Korrosion.

In Fig. 5 ist ein Teilbereich der Dichtung 55 zwischen der Siegelnaht 13 des Foliengehäuses 12 der Flachzelle 6 liegend dargestellt. Es kann zweckmäßig sein, die Dichtung über ihre gesamte Länge zwischen dem Ableiter 17, 18 und der Kontaktfläche 33 geklemmt zu halten, wie in Fig. 5 strichliert angedeutet ist.

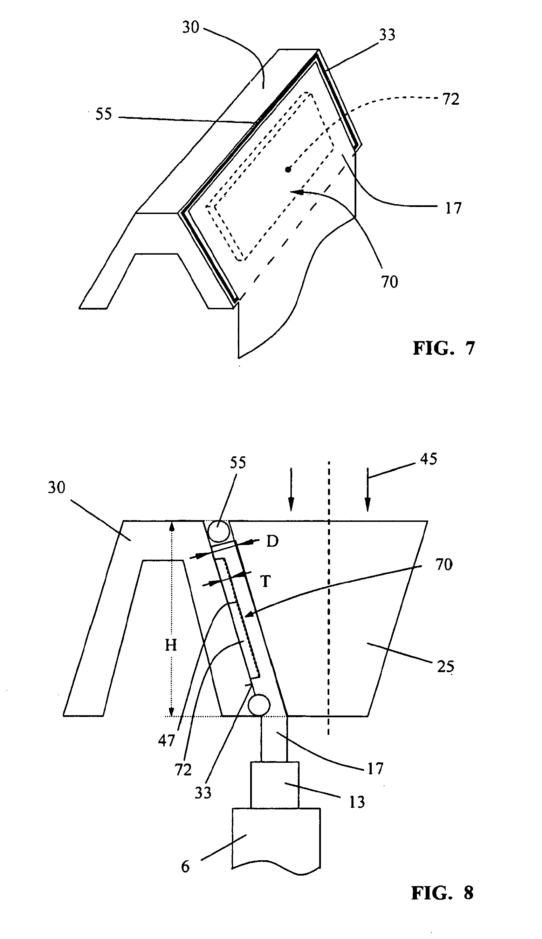

In den Fig. 7 und 8 ist eine besondere, vorteilhafte Kontaktierung eines Ableiters 17 auf der Kontaktfläche 33 eines Temperierelementes 30 wiedergegeben. Wie Fig. 7 zu entnehmen, ist auf der Kontaktfläche 33 ein erhabener Kontaktbereich 70 ausgebildet, der in seinen Abmessungen kleiner als die Kontaktfläche 33 vorgesehen ist und ähnlich einem Podest 72 aus der Kontaktfläche 33 vorsteht. Die Fläche des Kontaktbereichs 70 ist kleiner als die Fläche des Ableiters 17, so dass - wie Fig. 7 wiedergibt - der Ableiter 17 den Kontaktbereich 70 vollständig abdeckt und auf der den Kontaktbereich 70 umgebenden Kontaktfläche 33 aufliegt.

Aus dem Schnitt in Fig. 8 ist zu erkennen, wie der Ableiter 17 durch das Druckstück 25 auf den Kontaktbereich 70 und die Kontaktfläche 33 aufgedrückt wird. Dabei ist die Materialwahl so getroffen, dass sich der Kontaktbereich 70 prägend in den Ableiter 17 drückt, so dass - ist das Druckstück 25 in Befestigungsrichtung 45 festgelegt - nicht nur eine kraftschlüssige Kontaktierung des Ableiters 17 auf der Kontaktfläche 33 des Temperierelements 30 erzielt ist, sondern gleichzeitig eine Art formschlüssige Verankerung des Ableiters 18 auf dem Podest 72 des Temperierelementes 30 gewährleistet ist. Diese Art der Kontaktierung ist widerstandsfähig gegen Stoßbelastungen, Vibrationen und eventuell nachlassender Andrückkraft. Das Podest 72 des Kontaktbereichs 70 hat sich - wie die Fig. 7 und 8 schematisch wiedergeben - über seine gesamte Fläche in den flächenmäßig größer ausgebildeten Ableiter 18 eingepresst, so dass aufgrund der Materialverformung auch eine fast stoffschlüssige Verbindung erzielt ist. Dadurch ist insbesondere eine innige Kontaktierung eines Aluminium bestehenden Ableiters 17 gewährleistet, da aufgrund der Materialverformung eine Aluminiumoxidschicht durchbrochen wird, die eine elektrische Kontaktierung behindern könnte.

Um nach der Kontaktierung eine Korrosion im Kontaktbereich 70 zu vermeiden ist vorgesehen, die gesamte Kontaktfläche 33 durch eine umlaufende Dichtung 55 gegen die Umgebung abzudichten, wobei die Dichtung 55 vorzugsweise zwischen dem Druckstück 25 und dem Temperierelement 30 geklemmt gehalten ist. Wie Fig. 7 zeigt, verläuft die Dichtung 55 im Fußbereich des Ableiters 18 zwischen der Kontaktfläche 33 des Temperierelements 30 und dem Ableiter 17. Auch ist eine Anordnung zwischen der Kontaktfläche 33 und der Siegelnaht 13 des Foliengehäuses 12 vorteilhaft, wie in Fig. 5 dargestellt.

Außerhalb des Fußbereiches verläuft die Dichtung 55 zwischen dem Druckstück 25 und der Kontaktfläche 33 des Temperierelementes 30, so dass der Ableiter 17 an seinen Längskanten von der Dichtung 71 umrandet ist. Wie in Fig. 8 gezeigt, liegt die umlaufende Dichtung 55 als Dichtring innerhalb der Höhe H des Druckstücks 25.

Wie Fig. 8 zeigt, hat der Ableiter 17 eine Dicke D, die z. B. etwa im Bereich von 0,2 bis 0,4 mm liegen kann. Das Podest 72 prägt sich in das Material des Ableiters 17 über eine Tiefe T von etwa 50 % der Materialstärke des Ableiters 17 ein, im gezeigten Ausführungsbeispiel über eine Tiefe T von etwa 0,1 bis 0,2 mm. Im Bereich der Längskanten des Podestes 72 wird dadurch ein Übergreifen bzw. Hintergreifen erreicht, was einen Formschluss herstellt.

Für eine bessere elektrische Kontaktierung ist die dem Ableiter 17 zugewandte Fläche des Kontaktbereichs 70 aufgeraut, z. B. mit Erhebungen 47 wie Längsrippen, Stegen oder punktförmigen Warzen versehen.

## Patentansprüche

1. Akkupack, bestehend aus einer Mehrzahl einzelner Akkuzellen (5), insbesondere Akkuflachzellen (6), die jeweils einen Kathodenableiter (17) und einen Anodenableiter (18) aufweisen, wobei je zwei Ableiter (17, 18) benachbarter Akkuzellen (5, 6) elektrisch leitend miteinander verbunden sind,
**dadurch gekennzeichnet, dass** zwischen zwei elektrisch zu verbindenden Ableitern (17, 18) ein druckstabiles Kontaktelement (30) angeordnet ist, und ein Ableiter (17, 18) über ein Scherkräfte aufbringendes Druckstück (25) elektrisch leitend derart an das Kontaktelement (30) angedrückt ist, dass zwischen der Kontaktfläche (33) des Kontaktelementes (30) und der Kontaktfläche des Ableiters (17, 18) gegenparallele Kräfte (36) wirken.

2. Akkupack nach Anspruch 1,
**dadurch gekennzeichnet, dass** die Kontaktfläche (33) am Kontaktelement (30) unter einem Winkel (34) zur Längsmittelebene (42) des Druckstücks (25) liegt.

3. Akkupack nach Anspruch 1 oder 2,
**dadurch gekennzeichnet, dass** die Druckfläche (40, 41) des Druckstücks (25) unter einem Winkel (44) zu seiner Längsmittelebene (42) liegt.

4. Akkupack nach Anspruch 2 und 3,
**dadurch gekennzeichnet, dass** der Winkel (34) der Kontaktfläche (33) und der Winkel (44) der Druckfläche (40, 41) gleich sind und die Flächen eine schiefe Ebene bilden.

5. Akkupack nach einem der Ansprüche 1 bis 4,
**dadurch gekennzeichnet, dass** das Druckstück (25) in Befestigungsrichtung (43) verschraubt ist.

6. Akkupack nach einem der Ansprüche 1 bis 5,
**dadurch gekennzeichnet, dass** das Druckstück (25) aus einem elektrisch isolierenden Material besteht.

7. Akkupack nach Anspruch 6,
**dadurch gekennzeichnet, dass** das Druckstück (25) aus einem Kunststoff, insbesondere einem glasfaserverstärkten Kunststoff besteht.

8. Akkupack nach Anspruch 6 oder 7,
**dadurch gekennzeichnet, dass** das Druckstück (25) als Spritzgussteil hergestellt ist.

9. Akkupack nach einem der Ansprüche 1 bis 8,
**dadurch gekennzeichnet, dass** mehrere Kontaktelemente (30) in einer Reihe (22, 23) nebeneinander liegen, dass der einem ersten Kontaktelement (30) zugeordnete Ableiter (17) einer ersten Akkuzelle (5) und der einem benachbarten Kontaktelement (30) zugeordnete Ableiter (18) einer benachbarten Akkuzelle (5) durch ein gemeinsames Druckstück (25) in Anlage an das jeweils zugeordnete Kontaktelement (30) gedrückt ist.

10. Akkupack nach einem der Ansprüche 1 bis 9,
**dadurch gekennzeichnet, dass** die Ableiter (17, 18) eine Bodenplatte (20) durchragen, auf dem die Kontaktelemente (30) aufstehen und das Druckstück (25) auf der Bodenplatte (20) befestigt ist.

11. Akkupack nach einem der Ansprüche 1 bis 10,
**dadurch gekennzeichnet, dass** die Kontaktelemente (30) zur Bodenplatte (20) offen sind und ein an der Bodenplatte (20) ausgebildeter Steg (26) in das Kontaktelement (30) mechanisch stützend eingreift.

12. Akkupack nach einem der Ansprüche 1 bis 11,
**dadurch gekennzeichnet, dass** zumindest eine der einander gegenüberliegenden Kontaktflächen eine aufgeraute Oberfläche mit Erhebungen (46) aufweist, die unter Anlagedruck und Scherkraft in das gegenüberliegende Material elektrisch kontaktierend eindringen.

13. Akkupack nach einem der Ansprüche 1 bis 12,
**dadurch gekennzeichnet, dass** die einander gegenüberliegenden Kontaktflächen durch eine umlaufende Dichtung (55) abgedichtet sind.

14. Akkupack nach Anspruch 13,
**dadurch gekennzeichnet, dass** die umlaufende Dichtung (55) über einen Teilumfang zwischen dem Druckstück (25) und der Kontaktfläche (33) des Kontaktelementes (30) liegt.

15. Akkupack nach Anspruch 13 oder 14,
**dadurch gekennzeichnet, dass** der Raumbereich innerhalb der Dichtung (55) mit Leitpaste gefüllt ist.

## Claims

1. Battery pack, comprising a plurality of battery cells (5), in particular flat battery cells, each of which has a cathode arrester (17) and an anode arrester (18), two arresters (17, 18) each of adjacent battery cells (5, 6) being connected to one another in an electrically conductive manner,
**characterised in that** between two arresters (17, 18) to be connected there is placed a pressure-stable contact element (30) and an arrester (17, 18) is pressed against the contact element (30) in an electrically conductive manner via a pressure pad (25) applying shear forces in such a way that opposite parallel forces act between the contact surface (33) of the contact element (30) and the contact surface of the arrester (17, 18).

2. Battery pack according to claim 1,
**characterised in that** the contact surface (33) on the contact element (30) extends at an angle (34) to the longitudinal central plane (42) of the pressure pad (25).

3. Battery pack according to claim 1 or 2,
**characterised in that** the pressure surface (40, 41) of the pressure pad (25) extends at an angle (44) to its longitudinal central plane (42).

4. Battery pack according to claims 2 and 3,
**characterised in that** the angle (34) of the contact surface (33) and the angle (44) of the pressure surface (40, 41) are identical and the surfaces form an inclined plane.

5. Battery pack according to any of claims 1 to 4,
**characterised in that** the pressure pad (25) is bolted in the mounting direction (43).

6. Battery pack according to any of claims 1 to 5,
**characterised in that** the pressure pad (25) is made of an electrically insulating material.

7. Battery pack according to claim 6,
**characterised in that** the pressure pad (25) is made of a plastic material, in particular of a glass fibre reinforced plastic material.

8. Battery pack according to claim 6 or 7,
**characterised in that** the pressure pad (25) is produced as an injection-moulded part.

9. Battery pack according to any of claims 1 to 8,
**characterised in that** several contact elements (30) are placed adjacent to one another in a row (22, 23), and **in that** the arrester (17) of a first battery cell (5), which is assigned to a first contact element (30), and the arrester (18) of an adjacent battery cell (5), which is assigned to an adjacent contact element (30), are brought into contact with the associated contact element (30) by a common pressure pad (25).

10. Battery pack according to any of claims 1 to 9,
**characterised in that** the arresters (17, 18) extend through a base plate (20) on which the contact elements (30) stand, and **in that** the pressure pad (25) is secured to the base plate (20).

11. Battery pack according to any of claims 1 to 10,
**characterised in that** the contact elements (30) are open towards the base plate (20), and **in that** a web (26) formed on the base plate (20) engages with the contact element (30) for mechanical support.

12. Battery pack according to any of claims 1 to 11,
**characterised in that** at least one of the contact surfaces located opposite one another has a roughened surface with high spots (46) which penetrate in the material opposite in an electrically contacting manner under the effect of contact pressure and shear forces.

13. Battery pack according to any of claims 1 to 12,
**characterised in that** the contact surfaces located opposite one another are sealed by a peripheral seal (55).

14. Battery pack according to claim 13,
**characterised in that** the peripheral seal (55) lies between the pressure pad (25) and the contact surface (33) of the contact element (30) along a part of its circumference.

15. Battery pack according to claim 13 or 14,
**characterised in that** the space within the seal (55) is filled with conductive paste.

## Revendications

1. Batterie composée de plusieurs cellules de batterie individuelles (5), en particulier des cellules plates (6), qui comportent chacune un conducteur cathodique (17) et un conducteur anodique (18), étant précisé que deux conducteurs (17, 18) de cellules voisines (5, 6) sont reliés entre eux de manière conductrice d'électricité,
**caractérisée en ce qu'**un élément de contact stable à la pression (30) est disposé entre deux conducteurs (17, 18) à relier électriquement, et un conducteur (17, 18) est pressé de manière conductrice d'électricité contre l'élément de contact (30), par l'intermédiaire d'un élément de pression (25) qui applique des forces de cisaillement, de telle sorte que des forces parallèles et opposées (36) agissent entre la surface de contact (33) de l'élément de contact (30) et la surface de contact du conducteur (17, 18).

2. Batterie selon la revendication 1,
**caractérisée en ce que** la surface de contact (33) prévue sur l'élément de contact (30) définit un angle (34) par rapport au plan longitudinal médian (42) de l'élément de pression (25).

3. Batterie selon la revendication 1 ou 2,
**caractérisée en ce que** la surface de pression (40, 41) de l'élément de pression (25) définit un angle (44) par rapport au plan longitudinal médian (42) de l'élément de pression (25).

4. Batterie selon les revendications 2 et 3,
**caractérisée en ce que** l'angle (34) de la surface de contact (33) et l'angle (44) de la surface de pression (40, 41) sont égaux, et les surfaces forment un plan incliné.

5. Batterie selon l'une des revendications 1 à 4,
**caractérisée en ce que** l'élément de pression (25) est vissé dans le sens de fixation (43).

6. Batterie selon l'une des revendications 1 à 5,
**caractérisée en ce que** l'élément de pression (25) se compose d'un matériau isolant électriquement.

7. Batterie selon la revendication 6,
**caractérisée en ce que** l'élément de pression (25) se compose d'une matière plastique, en particulier d'une matière plastique renforcée par des fibres de verre.

8. Batterie selon la revendication 6 ou 7,
**caractérisée en ce que** l'élément de pression (25) est fabriqué sous la forme d'une pièce moulée par injection.

9. Batterie selon l'une des revendications 1 à 8,
**caractérisée en ce que** plusieurs éléments de contact (30) sont juxtaposés sur une ligne (22, 23), **en ce que** le conducteur (17) d'une première cellule de batterie (5) qui est associé à un premier élément de contact (30) et le conducteur (18) d'une cellule de batterie (5) voisine qui est associé à un élément de contact (30) voisin sont pressés par un élément de pression commun (25) contre l'élément de contact (30) respectivement associé.

10. Batterie selon l'une des revendications 1 à 9,
**caractérisée en ce que** les conducteurs (17, 18) traversent une plaque de base (20) sur laquelle se dressent les éléments de contact (30), et l'élément de pression (25) est fixé sur ladite plaque de base (20).

11. Batterie selon l'une des revendications 1 à 10,
**caractérisée en ce que** les éléments de contact (30) sont ouverts vers la plaque de base (20), et une barrette (26) formée sur la plaque de base (20) pénètre dans l'élément de contact (30) en assurant un appui mécanique.

12. Batterie selon l'une des revendications 1 à 11,
**caractérisée en ce que** l'une au moins des surfaces de contact opposées présente une surface rendue rugueuse pourvue de saillies (46) qui, sous l'effet de la pression d'application et de la force de cisaillement, pénètrent dans le matériau opposé en établissant un contact électrique.

13. Batterie selon l'une des revendications 1 à 12,
**caractérisée en ce que** les surfaces de contact opposées sont rendues étanches par un joint d'étanchéité périphérique (55).

14. Batterie selon la revendication 13,
**caractérisée en ce que** le joint d'étanchéité périphérique (55) se trouve sur une partie de la périphérie entre l'élément de pression (25) et la surface de contact (33) de l'élément de contact (30).

15. Batterie selon la revendication 13 ou 14,
**caractérisée en ce que** l'espace à l'intérieur du joint d'étanchéité (55) est rempli de pâte conductrice.
